# EUROPÄISCHE PATENTSCHRIFT

(11) **EP 2 141 035 B1**
(45) Veröffentlichungstag und Bekanntmachung des Hinweises auf die Patenterteilung: **14.09.2011**
(21) Anmeldenummer: 09007056.6
(22) Anmeldetag: 27.05.2009
(51) Int. Cl.: B60G 7/02, B60G 9/00, B62D 21/02

(54) **Mehrpunktlenkeranordnung für einen Fahrzeugrahmen eines Nutzfahrzeuges sowie Trägerkonsole und Querträger für eine Mehrpunktlenkeranordnung**
Multi-point arm assembly for a vehicle frame of a commercial vehicle and container console and cross-member for a multi-point arm assembly
Agencement de bras à plusieurs points pour le châssis d'un véhicule utilitaire ainsi que console de support et support transversal pour un agencement de bras à plusieurs points

(30) Priorität: 04.07.2008 DE 102008031775
(43) Veröffentlichungstag der Anmeldung: 06.01.2010
(73) Patentinhaber: MAN Truck & Bus AG, 80995 München (DE)
(72) Erfinder: Schmitt, Peter, 80937 München (DE); Hopfner, Johannes, 85560 Ebersberg (DE); Rossol, Martin, 80997 München (DE)

(56) Entgegenhaltungen:
- EP-A- 0 558 088
- EP-A- 0 739 764
- EP-B- 0 880 440
- EP-B- 1 042 133
- DE-A1- 10 334 687
- DE-A1-102004 045 523
- JP-A- 5 105 108
- JP-A- 2001 270 314

## Beschreibung

Die Erfindung betrifft eine Mehrpunktlenkeranordnung für einen Fahrzeugrahmen eines Nutzfahrzeuges nach dem Oberbegriff des Anspruchs 1.

Mehrpunktlenkeranordnungen für Nutzfahrzeuge sind allgemein bekannt. So zeigt beispielsweise die DE 103 34 687 A1 einen Verpunktlenker zur Anbindung einer Starrachse an den Rahmen eines Nutzfahrzeuges, bei dem der Vierpunktlenker zwei Lenkerarme aufweist, die gelenkig mit einer Starrachse des Nutzfahrzeuges verbunden sind, sowie weiterhin zwei Lenkerarme aufweist, die mittels Gelenken mit Rahmenteilen des Fahrzeugrahmens verbunden sind. Durch diese Vierpunktlenker werden Längslenker sowie Querlenker und ein Querstabilisator im Bereich der Starrachse ersetzt. Derartige Vierpunktlenker erfüllen die Funktion der Achsführung und der Querstabilisierung des Fahrzeugaufbaus gegenüber der Fahrzeugachse. Im Vierpunktlenker auftretende Biege- und Torsionsspannungen bewirken auch Rückstellkräfte in die Nulllage von Fahrzeugaufbau und Fahrzeugachse.

Der Vierpunktlenker zur Anbindung einer Starrachse an den Rahmen eines Nutzfahrzeuges ist ferner auch aus der DE 102 06 809 A1 sowie aus der DE 199 20 670 A1 bekannt.

Insbesondere bei Nutzfahrzeugen, bei denen durch das Transportgut bedingt der Fahrzeugschwerpunkt sehr hoch liegt, beispielsweise Tankfahrzeuge, Fleischtransportfahrzeuge, Milchsammelfahrzeuge etc., können die an der Hinterachse der Nutzfahrzeuge üblichen Stabilisierungswerte nicht ausreichend sein, was wiederum zu erhöhten Wankbewegungen bei Kurvenfahrten und damit zu einem unerwünschten Fahrgefühl für den Fahrer führen kann.

Um die Wankstabilisierung eines Nutzfahrzeuges zu erhöhen, ist es aus der DE 10 2004 045 523 A1 bereits bekannt, einen wankstabilisierenden Stabilisator in einer unteren Lenkerebene eines Achskörpers der Hinterachse anzuordnen und zusätzlich zum Stabilisator einen Vierpunktlenker bzw. X-Lenker in einer oberen Lenkerebene in einem oberen Bereich des Achskörpers anzuordnen. Damit soll eine wirksame Wankstabilisierung für eine Vielzahl von Anwendungsfällen zur Verfügung gestellt werden.

Weiter ist aus der EP 0 880 440 B1 eine Radaufhängung bekannt, bei der ein Querträger über ein Konsolenblech an die gegenüberliegenden Längsträger angeschlossen ist. Die Anbindung der Einzellenker am Querträger erfolgt hier über plattenförmige Trägerkonsolen, die sowohl am Längsträger als auch am Querträger angeschlossen wird. Ein vom Prinzip her ähnlicher Aufbau ist auch aus der EP 1 042 133 B1 bekannt. Der Befestigungsträger ist hier mit seiner Lagerfläche an einem Rahmenelement des Fahrzeuges befestigt, wobei die Befestigungsplatte an einem Ende einer Drehmomentstange befestigt ist, die eine Platte aufweist, die derart angeordnet ist, um mit einer Radaufhängung, die in einem Rahmenelement montiert ist, verbunden zu sein.

Demgegenüber ist es Aufgabe der vorliegenden Erfindung, eine alternative Mehrpunktlenkeranordnung für einen Fahrzeugrahmen eines Nutzfahrzeuges sowie eine Trägerkonsole und einen Querträger für eine Mehrpunktlenkeranordnung eines Fahrzeugrahmens für ein Nutzfahrzeug zur Verfügung zu stellen, mittels der bzw. dem eine zuverlässige Aufnahme von Wankbewegungen eines Mehrpunktlenkers auf baulich einfache und funktionssichere Weise möglich ist.

Diese Aufgabe wird bezüglich der Mehrpunktlenkeranordnung gelöst mit den Merkmalen des Anspruchs 1. Vorteilhafte Ausgestaltungen sind Gegenstand der darauf rückbezogenen Unteransprüche.

Gemäß Anspruch 1 umfasst die Mehrpunktlenkeranordnung einen Mehrpunktlenker, der mit vorgegebenen Lenkeranbindungspunkten mittelbar über eine Trägerkonsole mit dem Fahrzeugrahmen verbunden ist. Die Trägerkonsole ist wenigstens im Bereich eines Lenkeranbindungspunktes mit einer, bezogen auf die Fahrzeughochachsenrichtung, solchen Abstützhöhe am Fahrzeugrahmen angebunden, dass die Trägerkonsole vom Mehrpunktlenker eingeleitete Kräfte, insbesondere Wankkräfte, eines definierten, das heißt vorgegebenen Kraftspektrums bzw. Kraftbereichs, aufnimmt. Ein Querträger des Fahrzeugrahmens ist mittels Knotenelementen an dem jeweils zugeordneten Längsträger angebunden, wobei die Knotenelemente an den stirnseitigen Enden des Querträgers angeordnet und mit diesem sowie mit dem jeweils zugeordneten Längsträger kraft- und/oder formschlüssig verbindbar sind. Erfindungsgemäß ist die Trägerkonsole ausschließlich am Knotenelement angebunden.

Ein derartiger Aufbau ermöglicht auf einfache Weise die Ausbildung eines flexiblen Vormontagemoduls, das dann im Rahmen einer Großserienfertigung schnell und zuverlässig endmontiert werden kann. Denn durch die erfindungsgemäße Anbindung der Trägerkonsole lediglich an den Knotenelementen ergibt sich der besondere Vorteil, dass hierdurch eine hohe Flexibilität in Verbindung mit der Ausbildung unterschiedlicher Vormontagemodule für unterschiedliche Fahrzeugtypen zur Verfügung gestellt wird. Denn es braucht in einem solchen Fall lediglich der eigentliche Querträger eine z. B. unterschiedliche Länge aufweisen, um eine variable Rahmenspur einzustellen. Ferner können dann die Querträger auch an anderer Stelle ohne die Knotenbleche bzw. Trägerkonsolen eingesetzt und angebunden werden.

Mit der erfindungsgemäßen Lösung ist weiter eine sichere Aufnahme der wankstabilisierenden Kräfte aus einem z. B. X-Lenker als Mehrpunktlenker möglich. Dies wird auf baulich kompakte und funktionssichere Weise dadurch erreicht, dass die Anbindung eines Lenkerbestandteils des Mehrpunktlenkers am Fahrzeugrahmen in Verbindung mit einer genau auf den jeweiligen Fahrzeugtyp und die jeweiligen Belastungsfälle abgestimmten, definierten Abstützhöhe erfolgt. Die bevorzugte Abstützhöhe beträgt dabei zwischen 50 bis 500 mm, höchst bevorzugt zwischen 70 bis 400 mm. Der besonders bevorzugte Bereich liegt zwischen 90 bis 250 mm Abstützhöhe. Hierdurch lassen sich in optimierter Weise wankstabilisierende Kräfte aus dem z. B. X-Lenker als Mehrpunktlenker rahmenseitig aufnehmen und abstützen.

Die Abstützhöhe ist dabei bevorzugt durch die in Fahrzeughochachsenrichtung auf gegenüberliegenden Konsolenendbereichen liegenden Anbindungspunkte oder -bereiche definiert, insbesondere durch die in Fahrzeughochachsenrichtung einen maximalen Abstand voneinander aufweisenden Anbindungspunkte oder -bereiche gegenüberliegender Konsolenendbereiche. Diese definierte Abstützhöhe wird insbesondere im Bereich des Lenkeranbindungspunktes realisiert, da in diesem Bereich die Kräfte unmittelbar in den Fahrzeugrahmen eingeleitet werden und sich hierdurch günstige Kraftfluss- und Krafteinleitungsverhältnisse ergeben.

Die Trägerkonsole kann dabei sowohl unmittelbar als auch mittelbar am Fahrzeugrahmen angebunden sein. In Verbindung mit einer mittelbaren Anbindung der Trägerkonsole erfolgt dies vorzugsweise unter Zwischenschaltung wenigstens eines zusätzlichen Verstärkungs- und/oder Versteifungselementes. Ein derartiges zusätzliches Verstärkungs- und/oder Versteifungselementes kann z. B. durch eine Verstärkungsplatte und/oder einen Verstärkungsrahmen ausgebildet sein. Derartige "Materialdopplungen" können insbesondere in denjenigen Lastfällen von besonderem Vorteil sein, wo besonders hohe Wankkräfte wirken.

Die Trägerkonsole weist bevorzugt einen Konsolenflansch auf, der die Anbindungspunkte oder -bereiche der Trägerkonsole ausbildet und mittels dem die Trägerkonsole mittelbar oder unmittelbar am Fahrzeugrahmen angebunden ist. Der Konsolenflansch ist dabei bevorzugt durch eine Flanschplatte gebildet. Mit einer derartigen Flanschkonstruktion ergibt sich eine zuverlässige und funktionssichere, sowie einfach durchzuführende Anbindung der Trägerkonsole am Fahrzeugrahmen. Bevorzugt erfolgt die Anbindung der Trägerkonsole mittels einer kraftschlüssigen Verbindung, die insbesondere durch eine Mehrzahl von Schraubverbindungen als Anbindungspunkte ausgebildet ist. Alternativ und/oder zusätzlich kann jedoch auch die Anbindung der Trägerkonsole über eine formschlüssige Verbindung erfolgen, beispielsweise durch Nieten und/oder Schweißen oder dergleichen.

Eine besonders zuverlässige und funktionssichere Anbindung sieht vor, am Konsolenflansch eine Vielzahl von den Lenkeranbindungspunkt umgebenden, vorzugsweise in einem regelmäßigen Muster angeordneten, den Flanschbereich im Wesentlichen bedeckenden Schraublöchern auszubilden.

Der Lenkeranbindungspunkt selbst ist vorzugsweise durch wenigstens eine konsolenseitige Anbindungsstelle gebildet, an der ein Lenkerarm des Mehrpunktlenkers gelenkig angebunden ist. Diese gelenkige Anbindung erfolgt bevorzugt unter Zwischenschaltung eines Elastomerlagers.

Gemäß einer besonders bevorzugten konkreten Ausgestaltung ist vorgesehen, dass die Trägerkonsole wenigstens zwei beabstandete, den Lenkeranbindungspunkt ausbildende konsolenseitige Anbindungsstellen aufweist, an denen ein Lenkerarm des Mehrpunktlenkers mittels jeweils einer kraft- und/oder formschlüssigen Verbindung festgelegt ist. Eine derartige konsolenseitige Mehrpunktanbindung gewährleistet eine funktionssichere und hinsichtlich der Krafteinleitung und des Kraftflusses besonders vorteilhafte Ausgestaltung. Die wenigstens eine konsolenseitige Anbindungsstelle ist zudem gemäß einer weiteren bevorzugten Ausführungsform erhaben ausgebildet, das heißt, dass bevorzugt vom Konsolenflansch wenigstens eine den Lenkeranbindungspunkt ausbildende Erhebung abragt. Insbesondere mit einer derartigen erhabenen Konstruktion kann, neben einer einfachen Anbindung eines Lenkerbestandteils des Mehrpunktlenkers, ein Trägerkonsolenaufbau realisiert werden, bei dem die Trägerkonsole wenigstens in Teilbereichen innen hohl, das heißt als Hohlprofil ausgebildet ist. Ein derartiges Hohlprofil ermöglicht eine besonders starre und hinsichtlich der Krafteinleitung bzw. des Kraftflusses hervorragende Trägerkonsolenausgestaltung. Beispielsweise kann eine derartige Trägerkonsole sehr einfach und preiswert als stabiles Gussteil oder Schmiedeteil hergestellt sein.

Zudem können in Verbindung mit einer derartigen Erhebungen aufweisenden Trägerkonsolenkonstruktion auf einfache Weise auch solche Trägerkonsolen ausgebildet werden, die wenigstens zum Teil strebenartig mit wenigstens einer Stützstrebe bzw. wenigstens einem Stützstrebenbereich ausgebildet sind. Auch hierdurch lässt sich eine besonders zuverlässige und funktionssichere Krafteinleitung bzw. Kraftaufteilung der vom Mehrpunktlenker kommenden Kräfte, insbesondere Wankkräfte sicherstellen.

Der Mehrpunktlenker selbst ist bevorzugt als Vierpunkt- bzw. X-Lenker ausgebildet oder durch einen Dreiecklenker gebildet, wobei die Trägerkonsolen bevorzugt so gestaltet sind, dass sowohl ein Vierpunkt- bzw. X-Lenker als auch ein entsprechender Dreiecklenker an der Trägerkonsole angebunden werden können. Dadurch ist eine multifunktionale Verwendung der erfindungsgemäßen Trägerkonsole bzw. ein multifunktionaler Einsatz der erfindungsgemäßen Mehrpunktlenkeranordnung bei unterschiedlichsten Nutzfahrzeugtypen auf einfache Weise durchführbar.

Der Fahrzeugrahmen selbst kann in üblicher Weise durch Längs- und Querträger gebildet sein, wobei insbesondere zwei parallele und voneinander beabstandete Längsträger vorgesehen sind, zwischen denen wenigstens ein Querträger verläuft. Der Fahrzeugrahmen kann durch eine Leiterrahmenkonstruktion als auch durch jede andere Art von Rahmenkonstruktionen, z. B. eine Gitterrohrrahmenkonstruktion gebildet sein.

Als Kraft- und/oder Formschlussverbindung für die Anbindung der Knotenelemente kommt eine Schraubverbindung, eine Nietverbindung, eine Schweißverbindung oder dergleichen in Frage.

Die Knotenelemente selbst sind ein- oder mehrteilig ausgebildet, wobei sie bevorzugt so ausgebildet sind, dass sie das stirnseitige Ende des Querträgers wenigstens bereichsweise umgreifen. Gemäß einer besonders bevorzugten Ausgestaltung ist das Knotenelement, insbesondere ein Knotenblech, mit wenigstens einem sogenannten Schenkelbereich ausgebildet, der das stirnseitige Ende des Querträgers umgreift, wobei hier insbesondere ein U-förmiges Umgreifen mit U-Schenkeln bevorzugt ist. Dieser wenigstens eine Schenkel bereich liegt dann bevorzugt in einer flächigen Anlageverbindung an dem Querträger an und kann dort mit diesem flächig verbunden werden, wodurch sich besonders vorteilhafte Kraftflüsse ergeben, insbesondere in Verbindung mit einer Trägerkonsolenanordnung. Das Knotenelement kann aber auch eine andere Formgebung aufweisen, z. B. eine L-förmige Gestalt, bei der der eine L-Schenkel die flächige Anbindung an den Längsträger bewirkt und der andere L-Schenkel den Querträger, in Fahrzeughochachsenrichtung gesehen, von oben oder von unten um- bzw. übergreift. Das Knotenelement selbst kann, wie bereits zuvor ausgeführt, in jedem Fall ein- oder mehrteilig ausgebildet sein, z. B. durch zwei Knotenbleche, um die für jede Einbausituation geeignete Anbindung des Querträgers am Längsträger sicherzustellen.

Die Anbindung der Knotenelemente, insbesondere der Knotenbleche an den zugeordneten Längsträgern erfolgt dabei ebenfalls flächig, wozu die Knotenelemente in Längsträgererstreckungsrichtung gesehen eine gewisse Breite bzw. Länge aufweisen.

Der Mehrpunktlenker ist zudem in einem bevorzugten konkreten Einsatzfall an wenigstens einem Achsanbindungspunkt einer Hinterachse, insbesondere einer Starrachse eines Nutzfahrzeuges angebunden bzw. angelenkt. Diese Hinterachse kann zudem gemäß einer weiteren bevorzugten Ausgestaltung als luftgefederte Hinterachse ausgebildet sein. Auch ein Einsatz in Verbindung mit Blattfeder-Hinterachsen ist grundsätzlich möglich.

Die Erfindung wird nachfolgend anhand einer Zeichnung näher erläutert.

Es zeigen:
- Fig. 1: eine schematische, perspektivische Draufsicht auf einen Fahrzeugrahmen mit einer erfindungsgemäßen Mehrpunktlenkeranordnung,
- Fig. 2: eine Draufsicht auf einen eine erfindungsgemäße Mehrpunktlenkeranordnung aufweisenden Teilbereich des Fahrzeugrahmens der Fig. 1,
- Fig. 3: schematisch eine Vorderansicht des Fahrzeugrahmens der Fig. 2 in Richtung X, mit Detailansichten (Fig. 3a, 3b) eines erfindungsgemäßen Knotenblechs,
- Fig. 4: schematisch eine Vorderansicht einer ersten Ausführungsform einer erfindungsgemäßen Trägerkonsole,
- Fig. 5: eine Draufsicht auf die Trägerkonsole der Fig. 4,
- Fig. 6: schematisch eine Vorderansicht einer zweiten Ausführungsform einer erfindungsgemäßen Trägerkonsole,
- Fig. 7: schematische eine Draufsicht auf die Trägerkonsole der Fig. 6, und
- Fig. 8: eine isometrische Rückansicht der Trägerkonsole der Fig. 6 und 7.

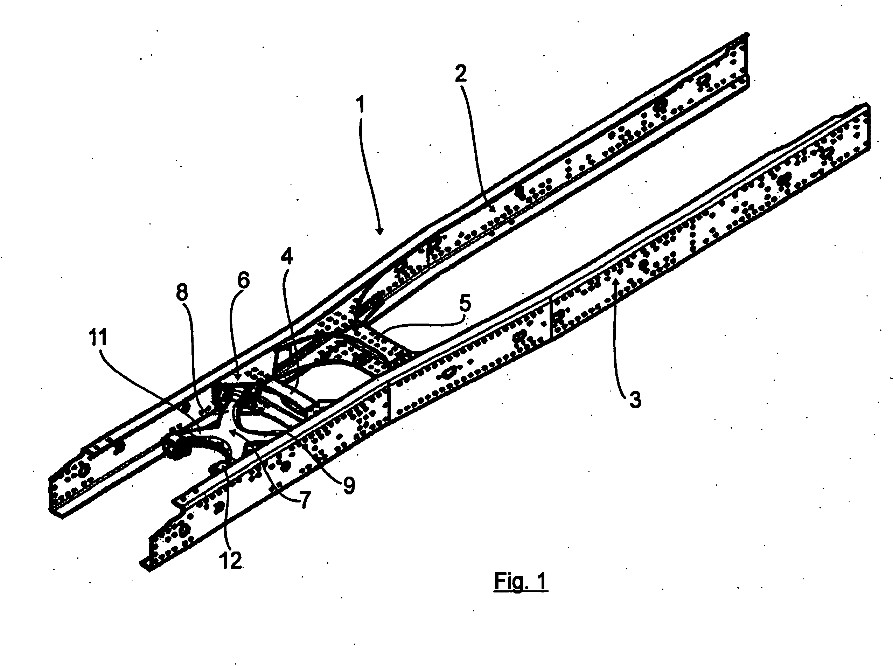

In der Fig. 1 ist schematisch und perspektivisch ein Fahrzeugrahmen 1 eines Lastkraftwagens gezeigt, der durch zwei voneinander beabstandete, parallele Längsträger 2, 3 gebildet ist, die in einem mehr mittleren Bereich mittels hier beispielhaft zwei Querträgern 4, 5 miteinander verbunden sind.

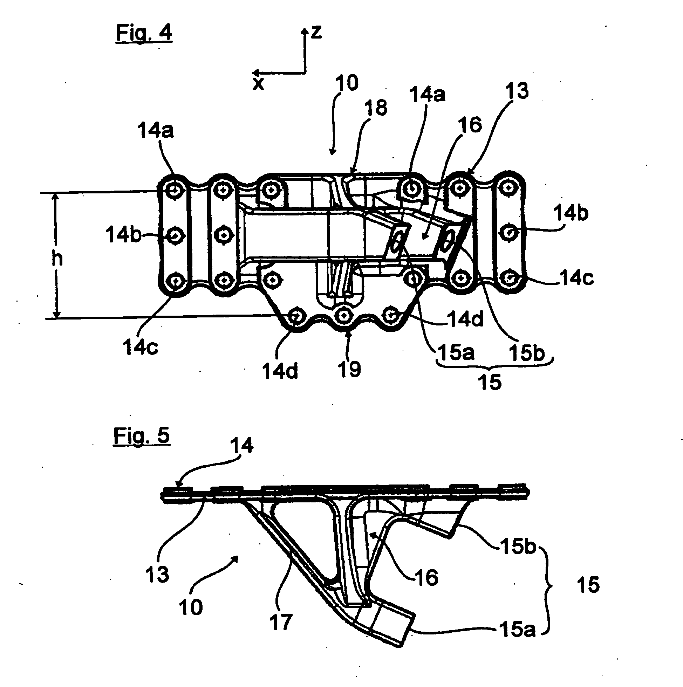

Weiter zeigt die Fig. 1 im Bereich vor dem vorderen, das heißt linken Querträger 4 eine erfindungsgemäße Mehrpunktlenkeranordnung 6 mit einem X-Lenker 7, dessen in der Bildebene der Fig. 1 hintere, das heißt rechte Lenkerarme 8, 9 über z. B. hier nicht im Detail dargestellte Elastomerlager gelenkig an einer in den Fig. 4 und 5 in einer Vorderansicht bzw. einer Draufsicht dargestellten Trägerkonsole 10 angebunden ist. Über jeweils eine Trägerkonsole 10 sind die Lenkerarme 8, 9 des X-Lenkers 7 an den Längsträgern 2, 3 in einer nachfolgend noch näher zu beschreibenden Weise unmittelbar im Bereich vor dem Querträger 4 angebunden.

Die beiden Lenkerarme 11, 12 des X-Lenkers 7 können beispielsweise an einer als Starrachse ausgebildeten, luftgefederten Hinterachse, die hier aus Übersichtlichkeitsgründen nicht mit dargestellt ist, angebunden sein.

Die in der Fig. 4 und 5 im Detail dargestellte Trägerkonsole 10 weist eine Konsolenflanschplatte 13 mit einer Mehrzahl von flanschseitigen Schraublöchern 14 auf, wobei von der Konsolenflanschplatte 13 eine einen Lenkeranbindungspunkt 15 ausbildende Erhebung 16 abragt, die am freien Endbereich in etwa eine U-Form ausbildet und an den U-Schenkelenden jeweils eine den Lenkeranbindungspunkt 15 ausbildende konsolenseitige Anbindungsstelle 15a und 15b aufweist. Diese Erhebung 16 ist zudem zur Konsolenflanschplatte 13 mittels einer Stützstrebe 17 abgestützt.

Der Bereich der Erhebung 16 kann im Wesentlichen bis zu den konsolenseitigen Anbindungsstellen 15a und 15b hin im Wesentlichen als Hohlprofil ausgebildet sein, wodurch sich eine gewichtsgünstige und besonders steife und stabile Trägerkonsolenkonstruktion ergibt, mittels der ein besonders vorteilhafter Kraftfluss von vom X-Lenker 7 kommenden Wankkräften in den Fahrzeugrahmen 1 hinein zur sicheren Aufnahme dieser Wankkräfte erfolgen kann.

Wie dies insbesondere der Fig. 4 entnommen werden kann, sind die Schraublöcher 14 in einem regelmäßigen Lochmuster an der Konsolenflanschplatte 13 angeordnet, wobei zudem durch die in Fahrzeughochachsenrichtung z gesehen den größten Abstand voneinander aufweisenden Schraublöcher 14a und 14d dieser Konsolenflanschplatte 13 eine solche definierte Abstützhöhe h der Trägerkonsole am Fahrzeugrahmen 1 vorgegeben wird, dass die Trägerkonsole 10 alle diejenigen Kräfte, insbesondere Wankkräfte vom X-Lenker 7 sicher aufnimmt, die innerhalb eines vorgegebenen bzw. definierten Kraftbereichs bzw. - spektrums liegen. Beispielsweise liegt die Abstützhöhe hier zwischen 50 bis 500 mm, bevorzugt zwischen 70 bis 400 mm, höchst bevorzugt zwischen 90 bis 250 mm.

Wie dies aus der Fig. 4 somit ersichtlich ist, wird die Abstützhöhe h durch die in Fahrzeughochachsenrichtung z gesehen durch die auf gegenüberliegenden Konsolenendseiten 18, 19 liegenden Schraublochreihen mit den Schraublöchern 14a, 14d gebildet, die zwischen sich die Schraublochreihen mit den Schraublöchern 14b und 14c einschließen.

Wie dies weiter aus der Fig. 4 sehr gut ersichtlich ist, sind die Schraublöcher 14d der in der Bildebene der Fig. 4 untersten Schraublochreihe hier lediglich im Bereich der Erhebung 16 bzw. der Stützstrebe 17 und damit im Bereich des Lenkeranbindungspunktes 15 dieser Trägerkonsole 10 ausgebildet, da in diesem Bereich die größten abzustützenden Kräfte auftreten.

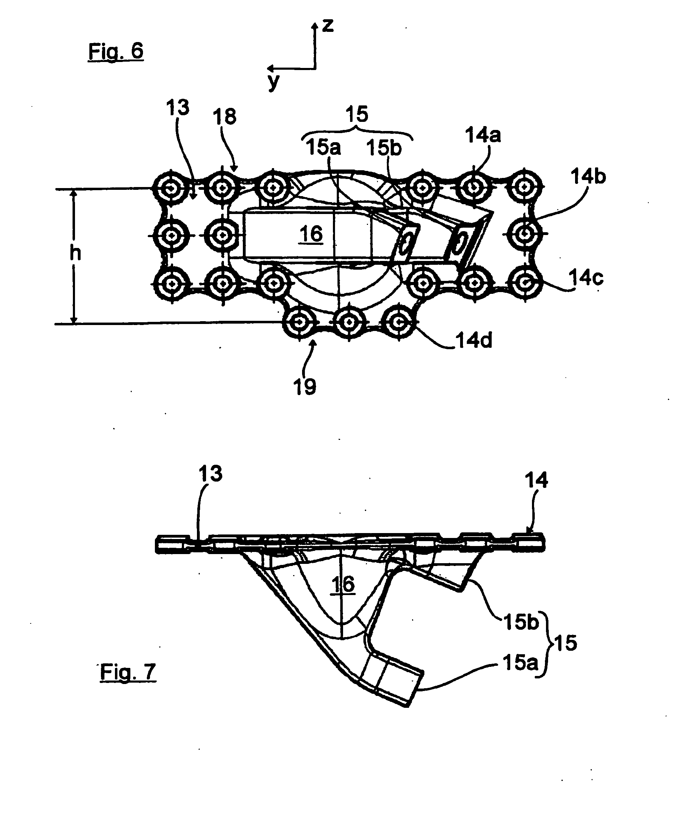

Die Fig. 6 bis 8 zeigen schließlich eine alternative Ausgestaltung der Trägerkonsole 10, die soweit nicht anders beschrieben im Wesentlichen identisch mit der Trägerkonsole 10 der Fig. 4 und 5 ist.

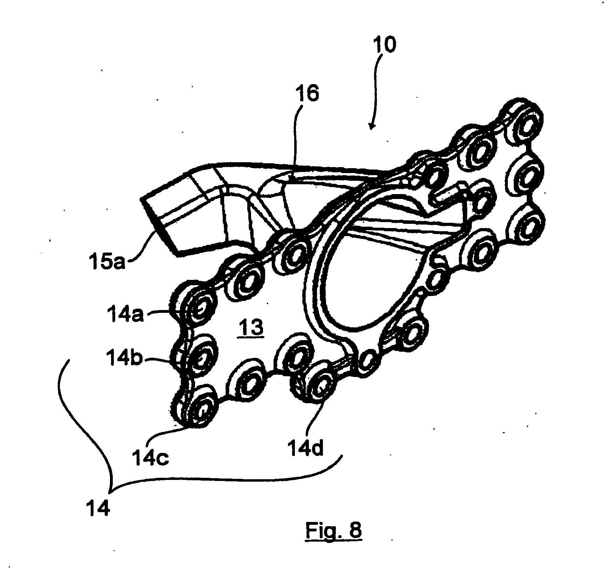

Wie dies insbesondere aus den Fig. 7 und 8 hervorgeht, ist die Erhebung 16 hier ohne eine Stützstrebe ausgeführt, so dass diese Erhebung 16 eine in etwa spitzkegelige Form aufweist. Wie dies insbesondere aus der Fig. 8 sehr gut ersichtlich ist, ist diese Erhebung 16 hier innen hohl als Hohlprofil ausgebildet, so dass sich auch in Verbindung mit dieser Ausführungsform eine sehr gewichtsgünstige und bezüglich des Kraftflusses und der Krafteinleitung stabile und optimale Trägerkonsolenkonstruktion ergibt. Bezüglich der Abstützhöhe h gilt hier das zuvor in Verbindung mit der Trägerkonsole der Fig. 4 und 5 Ausgeführte.

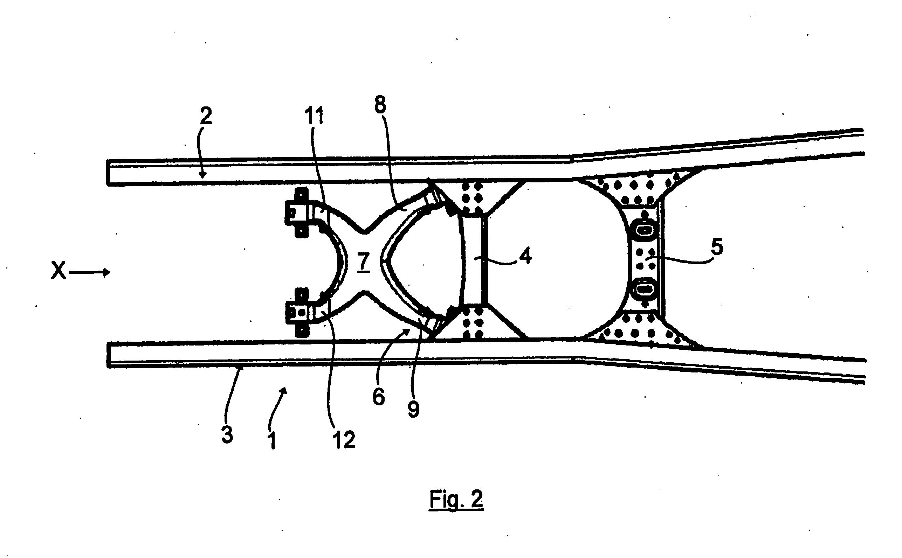

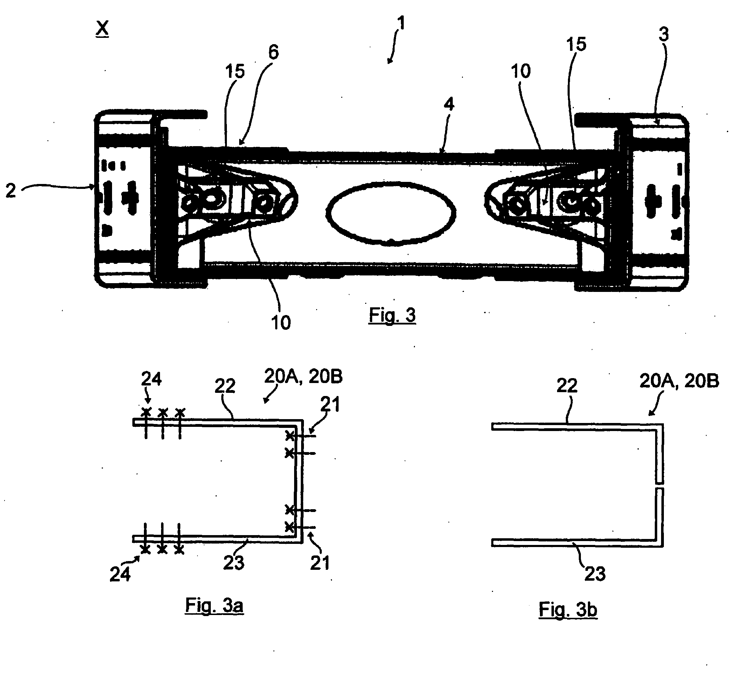

Über derartig ausgebildete Trägerkonsolen 10 können somit die Lenkerarme 8, 9 des X-Lenkers 7 an den Längsträger 2 bzw. an den Längsträger 3 angeschraubt werden, so dass sich eine besonders vorteilhafte und bezüglich der Wankstabilisierung optimierte Mehrpunktlenkeranordnung 6 am Fahrzeugrahmen eines Nutzfahrzeuges ergibt. Diese Anbindung der Trägerkonsole 10 an den Längsträgern 2, 3 ist insbesondere sehr gut aus der Fig. 3 ersichtlich, die eine Vorderansicht in Richtung X des Fahrzeugrahmens 1 gemäß der Draufsicht der Fig. 2 zeigt.

Aus der Zusammenschau der Fig. 1 bis 3, insbesondere auch der Fig. 3a und 3b ist zudem weiter sehr gut ersichtlich, dass der Querträger 4, der z. B. durch ein Querträgerblech gebildet ist, mittelbar über an den stirnseitigen Querträgerendbereichen angeordnete Knotenbleche 20A, 20B an die Längsträger 2, 3 angebunden ist. Diese Anbindung erfolgt bevorzugt kraftschlüssig mittels entsprechender Schraubverbindungen 21, die in der Fig. 3a lediglich äußerst schematisch dargestellt und eingezeichnet sind.

Wie dies den Fig. 1 bis 3, 3a und 3b ferner entnommen werden kann, kann das Knotenblech 20A, 20B im Querschnitt betrachtet U-förmig ausgebildet sein, um mit einem U-Schenkelbereich 22, 23 die stirnseitigen Querträgerendbereiche zu umgreifen und dabei an diesem in einer flächigen Anlageverbindung anzuliegen, wo sie durch entsprechende Schraubverbindungen 24 ebenfalls wiederum beispielhaft kraftschlüssig festgelegt werden.

Die Trägerkonsolen sind ausschließlich an den Knotenblechen 20A, 20B angebunden. In Verbindung mit einer derartigen Anbindung lediglich an den Knotenblechen 20A, 20B ergibt sich der Vorteil, dass hierdurch eine hohe Flexibilität in Verbindung mit der Ausbildung unterschiedlicher Vormontagemodule für unterschiedliche Fahrzeugtypen zur Verfügung gestellt wird. Denn es braucht in einem solchen Fall lediglich der eigentliche Querträger 4 eine z. B. unterschiedliche Länge aufweisen, um eine variable Rahmenspur einzustellen. Ferner können dann die Querträger auch an anderer Stelle ohne die Knotenbleche bzw. Trägerkonsolen eingesetzt und angebunden werden.

Beispielsweise können die Trägerkonsolen 10 hier z. B. mit wenigstens zwei kleineren Durchgangsschrauben an den Knotenblechen 20A, 20B bzw. dem Verbund aus Knotenblech und Querträger angebunden werden und so vorgruppiert geliefert werden. Dazu bedarf es dann aber auch wenigstens zweier Durchgangsbohrungen in den Trägerkonsolen 10 und wenigstens zweier Gewinde in den Knotenblechen 20A, 20B. Alternativ dazu können in äquivalenter Weise aber auch die Durchgangsbohrungen in dem Knotenblech und die Gewinde in der Trägerkonsole ausgebildet sein. Grundsätzlich ist aber auch ein Aufbau denkbar, bei dem im Knotenblech und in der Konsole lediglich Durchgangsbohrungen vorgesehen sind, die mittels einer Schraubverbindung verbunden werden. Dies ist in den Figuren nicht explizit dargestellt.

In der Fig. 3b ist dargestellt, dass jedes der Knotenbleche 20A ,20B auch mehrteilig aus hier beispielsweise zwei L-Profilen ausgebildet sein kann. Die L-Profile können grundsätzlich auch um 180°C gedreht mit voneinander wegweisenden vertikalen L-Schenkeln ausgebildet sein bzw. können die vertikalen L-Schenkel beider L-Profile jeweils in die gleiche Richtung nach oben oder nach unten (bezogen auf die Bildebene) weisen. Weitere Geometrien und Ausgestaltungen sind jederzeit möglich.

## Patentansprüche

1. Mehrpunktlenkeranordnung für einen Fahrzeugrahmen eines Nutzfahrzeuges, mit einem Mehrpunktlenker, der mit vorgegebenen Lenkeranbindungspunkten mittelbar über eine Trägerkonsole mit dem Fahrzeugrahmen verbunden ist, wobei die jeweilige Trägerkonsole (10) wenigstens im Bereich eines Lenkeranbindungspunktes (15) mit einer bezogen auf die Fahrzeughochachsenrichtung (z) solchen Abstützhöhe (h) am Fahrzeugrahmen (1) angebunden ist, dass die Trägerkonsole (10) vom Mehrpunktlenker (7) eingeleitete Kräfte eines definierten Kraftspektrums aufnimmt, und wobei ein Querträger (4) des Fahrzeugrahmens (1) mittels Knotenelementen (20A, 20B) an dem jeweils zugeordneten Längsträger (2, 3) angebunden ist, welche Knotenelemente (20A, 20B) an den stirnseitigen Enden des Querträgers (4) angeordnet und mit diesem sowie mit dem jeweils zugeordneten Längsträger (2, 3) kraft- und/oder formschlüssig verbindbar sind, **dadurch gekennzeichnet, dass** die Trägerkonsole (10) ausschließlich am Knotenelement (20A, 20B) angebunden ist.

2. Mehrpunktlenkeranordnung nach Anspruch 1, **dadurch gekennzeichnet, dass** die Abstützhöhe (h) zwischen 50 bis 500 mm, bevorzugt zwischen 70 bis 400 mm, höchst bevorzugt zwischen 90 bis 250 mm beträgt.

3. Mehrpunktlenkeranordnung nach Anspruch 1 oder 2, **dadurch gekennzeichnet, dass** die Abstützhöhe (h) durch die in Fahrzeughochachsenrichtung (z) im Bereich des Lenkeranbindungspunktes (15) einen maximalen Abstand voneinander aufweisenden Anbindungspunkte (14a, 14d) oder -bereiche gegenüberliegender Konsolenendbereiche (18, 19) definiert ist.

4. Mehrpunktlenkeranordnung nach einem der Ansprüche 1 bis 3, **dadurch gekennzeichnet, dass** die Trägerkonsole (10) mittelbar unter Zwischenschaltung wenigstens eines zusätzlichen Verstärkungs- und/oder Versteifungselementes, insbesondere wenigstens einer Verstärkungsplatte und/oder wenigstens eines Verstärkungsrahmens, am Fahrzeugrahmen angebunden ist.

5. Mehrpunktlenkeranordnung nach einem der Ansprüche 1 bis 4, **dadurch gekennzeichnet, dass** die Trägerkonsole (10) einen Konsolenflansch (13) aufweist, der die Anbindungspunkte (14a, 14d) oder -bereiche der Trägerkonsole (10) ausbildet und mittels dem die Trägerkonsole (10) mittelbar oder unmittelbar am Fahrzeugrahmen (1) angebunden ist.

6. Mehrpunktlenkeranordnung nach einem der Ansprüche 1 bis 5, **dadurch gekennzeichnet, dass** die Trägerkonsole (10) mittels einer kraftschlüssigen Verbindung, insbesondere mittels einer Mehrzahl von Schraubverbindungen als Anbindungspunkte mit dem Fahrzeugrahmen (1) verbunden ist.

7. Mehrpunktlenkeranordnung nach den Ansprüchen 5 und 6, **dadurch gekennzeichnet, dass** am Konsolenflansch (13) eine Vielzahl von dem Lenkeranbindungspunkt (15) umgebenden, vorzugsweise in einem regelmäßigen Muster angeordneten, den Flanschbereich im Wesentlichen bedeckenden Schraublöchern (14) ausgebildet ist.

8. Mehrpunktlenkeranordnung nach einem der Ansprüche 1 bis 7, **dadurch gekennzeichnet, dass** die Trägerkonsole (10) wenigstens eine den Lenkeranbindungspunkt (15) ausbildende konsolenseitige Anbindungsstelle (15a, 15b) aufweist, an der ein Lenkerarm (8, 9) des Mehrpunktlenkers (7) gelenkig angebunden ist, insbesondere mittels eines Elastomerlagers gelenkig angebunden ist.

9. Mehrpunktlenkeranordnung nach Anspruch 8, **dadurch gekennzeichnet, dass** die Trägerkonsole (10) wenigstens zwei beabstandete, den Lenkeranbindungspunkt (15) ausbildende konsolenseitige Anbindungsstellen (15a, 15b) aufweist, an denen ein Lenkerarm (8, 9) des Mehrpunktlenkers (7) mittels einer kraft- und/oder formschlüssigen Verbindung festgelegt ist.

10. Mehrpunktlenker nach Anspruch 8 oder 9, **dadurch gekennzeichnet, dass** die wenigstens eine konsolenseitige Anbindungsstelle (15a, 15b) erhaben ausgebildet ist, oder Bestandteil einer konsolenseitigen Erhebung (16) ist, und im montierten Zustand der Trägerkonsole (10) von dem Anbindungsbereich am Fahrzeugrahmen (1) wegragt.

11. Mehrpunktlenkeranordnung nach einem der Ansprüche 1 bis 10, **dadurch gekennzeichnet, dass** die Trägerkonsole (10) wenigstens in Teilbereichen als Hohlprofil ausgebildet ist.

12. Mehrpunktanordnung nach Anspruch 10 oder 11, **dadurch gekennzeichnet, dass** die den Lenkeranbindungspunkt (15) ausbildenden konsolenseitigen Anbindungsstellen (15a, 15b) wenigstens zum Teil strebenartig mit wenigstens einer Stützstrebe (17) ausgebildet sind.

13. Mehrpunktlenkeranordnung nach einem der Ansprüche 1 bis 12, **dadurch gekennzeichnet, dass** der Mehrpunktlenker durch einen Vierpunkt- oder X-Lenker (7) oder durch einen Dreiecklenker gebildet ist.

14. Mehrpunktlenkeranordnung nach einem der Ansprüche 1 bis 13, **dadurch gekennzeichnet, dass** der Fahrzeugrahmen (1), insbesondere ein Leiterrahmen oder ein Gitterrohrrahmen, durch Längs- und Querträger (2, 3) gebildet ist, insbesondere zwei parallele und voneinander beabstandete Längsträger (2, 3) vorgesehen sind, zwischen denen wenigstens ein Querträger (4, 5) verläuft.

15. Mehrpunktlenkeranordnung nach einem der Ansprüche1 bis 14, **dadurch gekennzeichnet, dass** die Knotenelemente (20A, 20B) ein- oder mehrteilig ausgebildet sind und bevorzugt das stirnseitige Ende des Querträgers (4) dabei mit wenigstens einem Schenkelbereich umgreifen, insbesondere L- oder U-förmig umgreifen, dergestalt, dass der wenigstens eine Schenkelbereich in einer flächigen Anlageverbindung an dem Querträger (4) anliegt und mit diesem wenigstens dort verbindbar ist.

16. Mehrpunktlenkeranordnung nach einem der Ansprüche 1 bis 15, **dadurch gekennzeichnet, dass** die Trägerkonsole (10) ein Vormontagemodul ausbildet, das mit den Längsträgern (2, 3) verbindbar ist.

17. Mehrpunktlenkeranordnung nach einem der Ansprüche 1 bis 16, **dadurch gekennzeichnet, dass** die Trägerkonsole (10) als Gussteil oder Schmiedeteil hergestellt ist.

18. Mehrpunktlenkeranordnung nach einem der Ansprüche 1 bis 17, **dadurch gekennzeichnet, dass** der Mehrpunktlenker (7) zudem an wenigstens einem Achsanbindungspunkt einer Hinterachse, insbesondere einer Starrachse und/oder einer luftgefederten Hinterachse, eines Nutzfahrzeuges angebunden beziehungsweise angelenkt ist.

## Claims

1. Multi-point arm assembly for a vehicle frame of a commercial vehicle, with a multi-point arm that is indirectly joined to the vehicle frame by predefined arm connection points via a support bracket, wherein the respective support bracket (10) is connected at least in the area of one arm connection point (15) with a support height (h) on the vehicle frame (1) referred to the vertical axis direction of the vehicle (z) such that the support bracket (10) absorbs forces in a defined force spectrum introduced by the multi-point arm (7), and wherein one cross-member (4) of the vehicle frame (1) is connected to the associated side member (2, 3) by means of gusset elements (20A, 20B), said gusset elements (20A, 20B) being arranged at the face ends of the cross-member (4) and being connectable by non-positive and/or positive means with the associated side member (2, 3), **characterised in that** the support bracket (10) is connected only at the gusset element (20A, 20B).

2. Multi-point arm assembly according to Claim 1, **characterised in that** the support height (h) is between 50 and 500 mm, preferably between 70 and 400 mm, and most preferably between 90 and 250 mm.

3. Multi-point arm arrangement according to Claim 1 or 2, **characterised in that** the support height (h) is defined by the connection points (14a, 14d) or areas of opposing bracket end areas (18, 19) having a maximum distance from each other in the vertical axis direction of the vehicle (z) in the area of the arm connection point (15),

4. Multi-point arm assembly according to any one of Claims 1 to 3, **characterised in that** the support bracket (10) is connected indirectly to the vehicle frame by intermediate insertion of at least one reinforcing and/or stiffening element, particularly at least one reinforcing plate and/or at least one reinforcing frame.

5. Multi-point arm assembly according to any one of Claims 1 to 4, **characterised in that** the support bracket (10) has a bracket flange (13) forming the connection points (14a, 14d) or areas of the support bracket (10) and by means of which the support bracket (10) is connected indirectly or directly on the vehicle frame (1).

6. Multi-point arm assembly according to any one of Claims 1 to 5, **characterised in that** the support bracket (10) is connected with the vehicle frame (1) by a non-positive connection, particularly by a plurality of screw connections as connection points.

7. Multi-point arm assembly according to Claims 5 and 6, **characterised in that** on the bracket flange (13) there is a large number of screw holes (14) surrounding the arm connection point (15), said holes being preferably arranged in a regular pattern and largely covering the flange area.

8. Multi-point arm assembly according to any one of Claims 1 to 7, **characterised in that** the support bracket (10) has at least one bracket-side connection location (15a, 15b) forming the arm connection point (15) at which one arm (8, 9) of the multi-point arm (7) is connected by an articulated joint, particularly by an articulated joint in the form of an elastomer bearing.

9. Multi-point arm assembly according to Claim 8, **characterised in that** the support bracket (10) has at least two bracket-side connection locations (15a, 15b) forming the arm connection point (15) at which one arm (8, 9) of the multi-point arm (7) is fixed by means of a non-positive and/or positive connection.

10. Multi-point arm according to Claim 8 or 9, **characterised in that** the at least one bracket-side connection location (15a, 15b) is raised or part of a bracket-side elevation (16) and projects away from the connection area on the vehicle frame (1) in assembled condition of the support bracket (10).

11. Multi-point arm assembly according to any one of Claims 1 to 10, **characterised in that** the support bracket (10) is realised as a hollow profile at least in partial areas.

12. Multi-point arm assembly according to Claim 10 or 11, **characterised in that** the connection locations (15a, 15b) forming the arm connection point (15) are realised at least partly in strut form with at least one support strut (17).

13. Multi-point arm assembly according to any one of Claims 1 to 12, **characterised in that** the multi-point arm is realised by a four-point or X-arm (7) or by an A-arm.

14. Multi-point arm assembly according to any one of Claims 1 to 13, **characterised in that** the vehicle frame (1), particularly a ladder frame or tubular space frame, is realised by means of side members and cross-members (2, 3), particularly with two parallel side members (2, 3) located at a distance from each other, between which there is at least one cross-member (4, 5).

15. Multi-point arm assembly according to any one of claims 1 to 14, **characterised in that** the gusset elements (20A, 20B) consist of at least one or two parts and preferably wrap around the face end of the cross-member (4) with at least one leg area, particularly wrapping around in L or U form, such that the at least one leg area has a plane contact connection with the cross-member (4) and can be connected with the latter at least there.

16. Multi-point arm assembly according to any one of Claims 1 to 15, **characterised in that** the support bracket (10) is realised as a pre-assembly module that can be connected with the side members (2, 3).

17. Multi-point arm assembly according to any one of Claims 1 to 16, **characterised in that** the support bracket (10) is realised as a cast or forged part.

18. Multi-point arm assembly according to any one of Claims 1 to 17, **characterised in that** the multi-point arm (7) is also connected or linked to at least one axle connection point of a rear axle, particularly a rigid axle and/or air-sprung rear axle, of a commercial vehicle.

## Revendications

1. Structure à bras de guidage multipoints pour un cadre de véhicule d'un véhicule industriel, avec un bras de guidage multipoints relié au cadre de véhicule au moyen de points de liaison de bras de guidage prédéfinis via une console porteuse, chaque console porteuse (10) étant reliée au cadre de véhicule (1) au moins au niveau d'un point de liaison de bras de guidage (15) à une telle hauteur d'appui (h) en référence au sens de l'axe vertical du véhicule (z) que la console porteuse (10) absorbe les forces induites par le bras de guidage multipoints (7) d'une plage de force définie et une traverse (4) du cadre de véhicule (1) étant reliée à chaque longeron affecté (2, 3) au moyen d'éléments d'assemblage (20A, 20B) qui sont disposés aux extrémités avant de la traverse (4) et peuvent être reliés à celle-ci ainsi qu'au longeron affecté respectivement (2, 3) par liaison par adhérence et/ou par liaison mécanique, **caractérisée en ce que** la console porteuse (10) est reliée exclusivement à l'élément d'assemblage (20A, 20B).

2. Structure à bras de guidage multipoints selon la revendication 1, **caractérisée en ce que** la hauteur d'appui (h) est comprise entre 50 et 500 mm, de préférence entre 70 et 400 mm et dans le meilleur des cas entre 90 et 250 mm.

3. Structure à bras de guidage multipoints selon la revendication 1 ou 2, **caractérisée en ce que** la hauteur d'appui (h) est définie par les points de liaison (14a, 14d) ou zones de liaison de parties d'extrémité de console (18, 19) opposées, présentant une distance maximale les uns par rapport aux autres dans le sens de l'axe vertical du véhicule (z) au niveau du point de liaison de bras de guidage (15).

4. Structure à bras de guidage multipoints selon l'une des revendications 1 à 3, **caractérisée en ce que** la console porteuse (10) est reliée au cadre de véhicule indirectement en utilisant au moins un élément de renfort et/ou de rigidité supplémentaire, en particulier au moins une plaque de renfort et/ou au moins un cadre de renfort.

5. Structure à bras de guidage multipoints selon l'une des revendications 1 à 4, **caractérisée en ce que** la console porteuse (10) présente une bride pour console (13) qui forme les points de liaison (14a, 14d) ou zones de liaison de la console porteuse (10) et au moyen de laquelle la console porteuse (10) est reliée directement ou indirectement au cadre de véhicule (1).

6. Structure à bras de guidage multipoints selon l'une des revendications 1 à 5, **caractérisée en ce que** la console porteuse (10) est reliée au cadre de véhicule (1) au moyen d'une liaison par adhérence, en particulier au moyen d'une multitude de liaisons boulonnées servant de points de liaison.

7. Structure à bras de guidage multipoints selon les revendications 5 et 6, **caractérisée en ce qu'**une multitude de trous de vis (14) environnant le point de liaison de bras de guidage (15), disposés de préférence selon un modèle régulier et couvrant la zone de bridage pour l'essentiel est formée au niveau de la bride pour console (13).

8. Structure à bras de guidage multipoints selon l'une des revendications 1 à 7, **caractérisée en ce que** la console porteuse (10) présente au moins un endroit de liaison (15a, 15b) côté console formant le point de liaison de bras de guidage (15), sur lequel un bras (8, 9) du bras de guidage multipoints (7) est relié de manière articulée, en particulier au moyen d'un palier en élastomère.

9. Structure à bras de guidage multipoints selon la revendication 8, **caractérisée en ce que** la console porteuse (10) présente au moins deux endroits de liaison (15a, 15b) côté console placés à une certaine distance l'un de l'autre et formant le point de liaison de bras de guidage (15), sur lesquels un bras (8, 9) du bras de guidage multipoints (7) est fixé au moyen d'une liaison par adhérence et/ou mécanique.

10. Structure à bras de guidage multipoints selon la revendication 8 ou 9, **caractérisée en ce qu'**au minimum l'endroit de liaison (15a, 15b) côté console est formé de manière convexe ou fait partie d'une élévation (16) côté console, et dépasse de la zone de liaison sur le cadre de véhicule (1) dans l'état monté de la console porteuse (10).

11. Structure à bras de guidage multipoints selon l'une des revendications 1 à 10, **caractérisée en ce que** la console porteuse (10) est formée au moins dans des zones partielles comme profilé creux.

12. Structure à bras de guidage multipoints selon la revendication 10 ou 11, **caractérisée en ce que** les endroits de liaison (15a, 15b) formant le point de liaison de bras de guidage (15) côté console sont formés au moins partiellement sous forme d'entretoise avec au moins une entretoise d'appui (17).

13. Structure à bras de guidage multipoints selon l'une des revendications 1 à 12, **caractérisée en ce que** le bras de guidage multipoints (7) est formé d'un bras de guidage à quatre points ou en X (7) ou d'un triangle de guidage.

14. Structure à bras de guidage multipoints selon l'une des revendications 1 à 13, **caractérisée en ce que** le cadre de véhicule (1), en particulier un cadre en échelle ou un cadre tubulaire en treillis, est formé de longerons et de traverses (2, 3) et il est prévu en particulier deux longerons (2, 3) parallèles et situés à une certaine distance l'un par rapport à l'autre entre lesquels est placé au moins une traverse (4, 5).

15. Structure à bras de guidage multipoints selon l'une des revendications 1 à 14, **caractérisée en ce que** les éléments d'assemblage (20A, 20B) sont formés d'une ou de plusieurs pièces et enveloppent de préférence l'extrémité avant de la traverse (4) à cet effet avec au moins une partie du côté, en particulier en forme de L ou de U de telle manière qu'au moins la partie du côté s'appuie sur la traverse (4) dans une liaison d'appui de grande surface et peut être reliée à cet endroit à cette traverse (4).

16. Structure à bras de guidage multipoints selon l'une des revendications 1 à 15, **caractérisée en ce que** la console porteuse (10) forme un module de prémontage qui peut être relié aux longerons (2, 3).

17. Structure à bras de guidage multipoints selon l'une des revendications 1 à 16, **caractérisée en ce que** la console porteuse (10) est fabriquée comme pièce en fonte ou pièce forgée.

18. Structure à bras de guidage multipoints selon l'une des revendications 1 à 17, **caractérisée en ce que** le bras de guidage multipoints (7) est relié ou articulé en plus au moins à un point de liaison d'essieu d'un pont arrière, en particulier d'un essieu rigide et/ou d'un pont arrière à suspension pneumatique, d'un véhicule industriel.
